# EUROPEAN PATENT APPLICATION

(11) **EP 1 020 671 A2**
(43) Date of publication of application: **19.07.2000**
(21) Application number: 99830596.5
(22) Date of filing: 22.09.1999
(51) Int. Cl.: F16K 31/60, F16K 35/00

(54) **Economy device for single-lever taps for hot and cold water**

(30) Priority: 15.01.1999 IT BS990005 U
(71) Applicant: Nuova Galatron S.r.l., 46043 Castiglione D/Stiviere (Mantova) (IT)
(72) Inventor: Sarasini, Gabriele, 25100 Brescia (IT)
(74) Representative: Manzoni, Alessandro

(57) **Abstract**

This invention concerns an economy device for single-lever taps for hot and cold water, having a command lever (12) capable of turning and rotating together with said rotating neck (14) to control the tap unit. The device includes a blocking element (15), applied to said command lever (12) and interacting with the top of said rotating neck (14), in order to constrain and temporarily stop the lever in the course of its rotation from the closed to the open position, and a means for stopping the rotation of the lever in the course of its mixing movements.

## Description

This invention concerns single-lever taps for hot and cold water, containing a body cartridge, a tap unit consisting of at least two nuts in ceramic or similar, one of which is fixed and the other movable upon the fixed one by means of a command lever equipped with a handle.

To be more specific, the invention is concerned with an economy device that can be applied to such single-lever taps in order to save water.

In single-lever taps, the command lever is capable of rotating around a horizontal axis, corresponding to the opening (upward movement) and closing (downward movement) of the tap, as well as rotating around a vertical axis, corresponding to the variations in flow the hot and cold water. The command lever is usually moved from the closed to the totally open position without any intermediate stop, in other words, without regulating the flow in any way, which means that whenever a limited flow would have been sufficient, water is wasted. Likewise, when the tap is rotated horizontally to mix the water, there is no intermediate blockage point between the two extremes.

One aim of this invention is to provide an economy device which, when applied to single-lever taps for hot and cold water, will give the user the sensation of having opened the tap completely, when, in fact, it is only partially open.

Another aim of this invention is to provide a means of interrupting the rotation of the command lever on a single-lever tap, so as to limit the angle of rotation and, once again, give the sensation of having reached the end of the manoeuvre, when this is not really the case.

Another objective of this invention is to provide an economy device that can simulate the completely open and mixed flow positions of a single-lever tap by means of a temporary block of the command lever in the course of its two manoeuvres, in such a way as to avoid involuntarily opening the tap completely and wasting water.

A final aim of this invention is to supply an economy device that can be applied to single-lever taps of all dimensions, without modifying their structure, as well as leaving the possibility of completely opening and mixing the flow when the user makes the voluntary decision to push the command lever further, in such a way as to overcome the blocking means and the temporary stop.

As intended by this invention, these aims, and the practical and economic advantages that they bring, are achieved, by using the economy device as described in claim 1.

Greater detail about the invention will become clear from the description that follows, which refers to the enclosed drawings, where:
Fig. 1 shows a single-lever tap with an exploded view of the economy device elements;
Fig. 2 shows the same single-lever tap as Fig. 1, but with the blocking elements for the opening and mixing movements of the command lever;
Fig. 3 shows a side view of the assembled tap from Fig. 2;
Fig. 4 shows a view from above of the tap in Fig. 3;
Fig. 5 shows a single-lever tap with just the element for blocking the rotation of the command lever separate;
Fig. 6 shows the tap from Fig. 5 but with the addition of the element for blocking the command lever rotation; and
Fig. 7 shows a view from above of the tap in Fig. 6.

In these drawings, the single-lever tap to which this invention has been applied is indicated with number 11 and it is inserted and held in the usual way within the cock body, which is not represented.

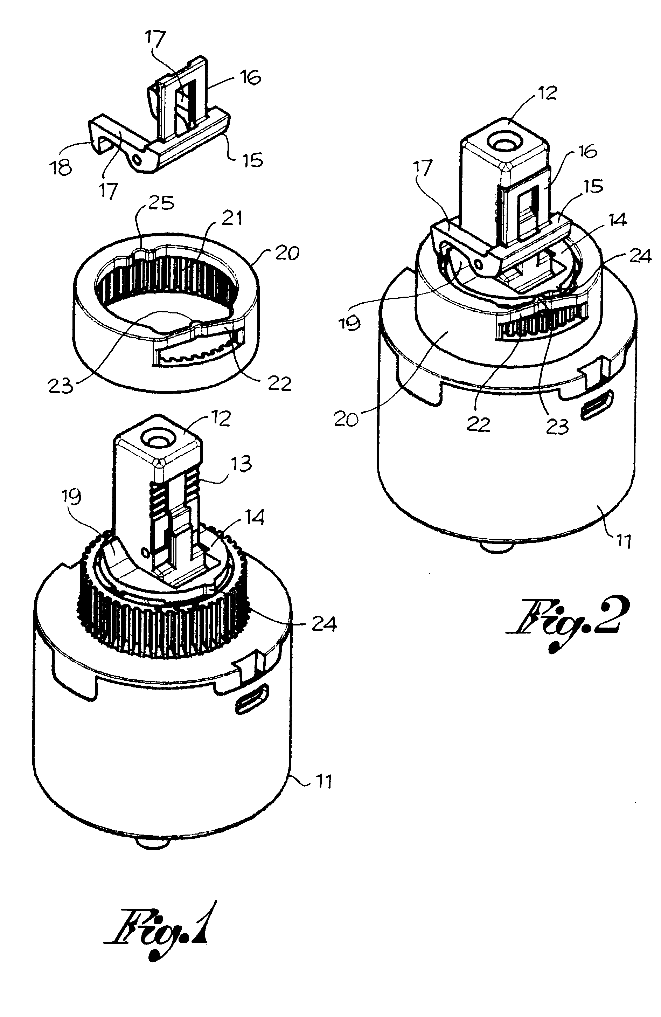

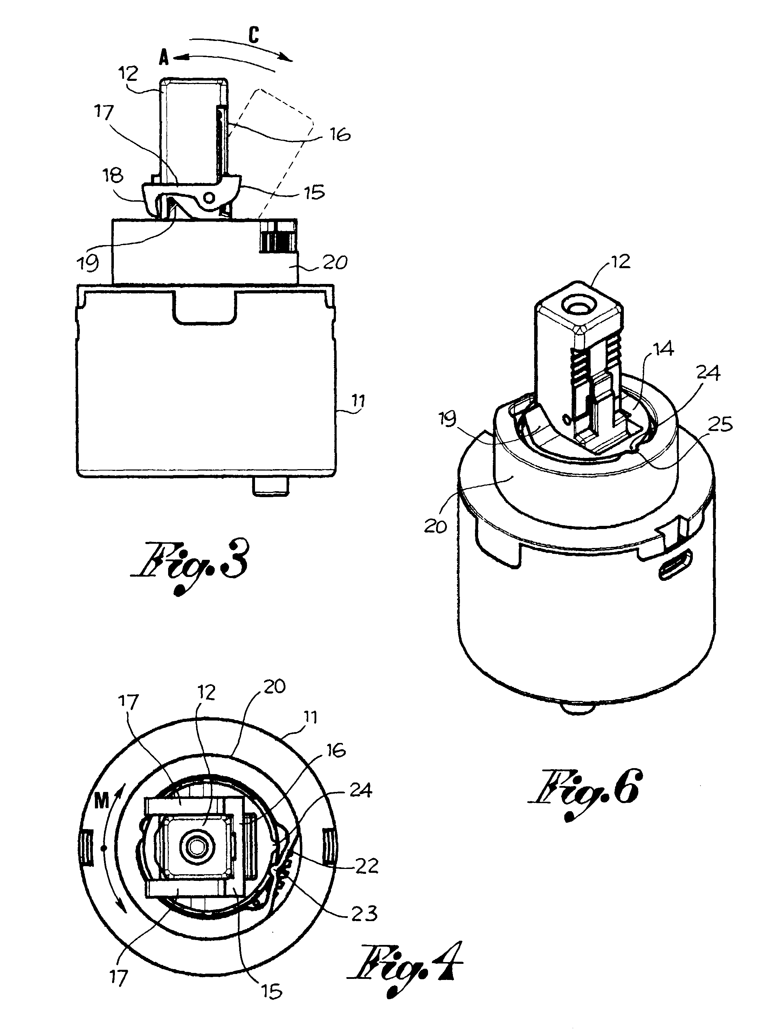

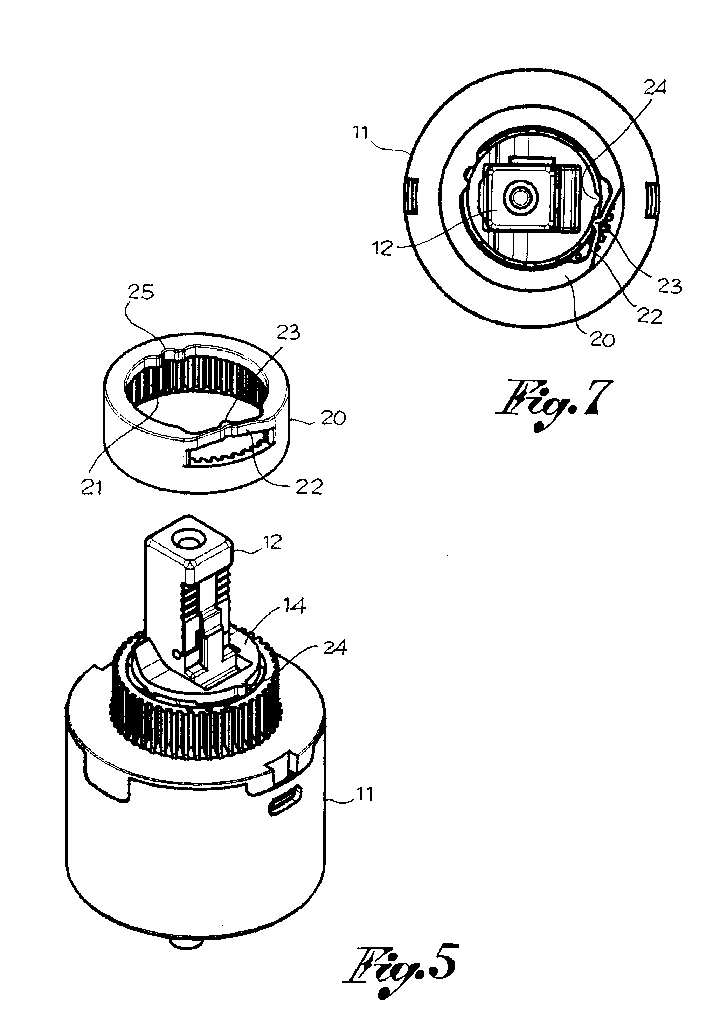

The structure of the single-lever tap is already a known entity and, consequently, does not merit a particular description here. It is worth noting only that it has a command lever 12 with a handle for the manoeuvres of opening and closing the tap. The command lever 12, equipped with grips 13, is usually capable of rotating around a horizontal axis, corresponding to the opening (upward movement) and closing (downward movement) of the tap, according to the arrows A-C in Fig. 3. Likewise, the rotations around a vertical axis, together with a rotating circular neck 14 (the M arrows in Fig. 4), correspond to the degrees of hot and cold water-flow during the mixing process.

As required by the invention, a blocking element 15 is applied to the command lever 12 to cause a temporary intermediate stop of the latter, during the opening movement (arrow A). This happens in such a way as to simulate a complete opening of the single-lever tap, when, in fact, it is really only about half-open.

Said temporary blocking element 15 for the opening manoeuvre is a single piece, being essentially an L-shape (see Fig. 1), with a vertical tab 16 and two lever arms 17. These arms 17 are, essentially, horizontal and parallel, as well as being relatively elastic and each terminating in a lobe rest 18.

The vertical tab 16 of the blocking element 15 (see Figs 2-4) is held to the side of the command lever 12 that faces the direction of its closing movement (arrow C), while the lever arms 17 extend to either side of the command lever 12, parallel to the rotation plane of the lever itself. When the temporary blocking element 15 is applied to the command lever 12, the terminal lobes 18 of the parallel arms 17 rest on the top surface of the tap neck 14, which turns according to the command lever.

Ideally, said surface of the neck 14 has two tilted planes 19 (see Figs 1 and 2), in correspondence with the terminal lobes 18 of the parallel arms 17, with which they interact.

In this way, when the command lever 12 is moved from the closed to the open position, according to arrow A (see Fig. 3), once it has reached a pre-determined angle, the blocking element 15 intervenes and stops the lever. More specifically, the lobes 18 of the parallel arms 17 interact with the respective inclined planes 19 to create an obstacle, which tends to block the command lever, thereby giving the sensation of having reached the point of maximum opening, when, in fact, it is not so.

The user is therefore encouraged to stop the opening manoeuvre and the tap will remain only partially open, thereby saving water.

Furthermore, when needed, the tap can be opened fully, by slightly forcing the handle until it overcomes the obstacle, which had determined the point of intermediate opening, pushing down the inclined planes thanks to the elasticity of the arms 17 that act against the top of the single-lever tap.

Such a tap may also be equipped with a constraint device 20, having the task of stopping the command lever 12 in the course of its rotation (arrows M) for mixing the water, or, as an alternative, for defining a single mixing position intended to avoid wasting hot water, especially in public places.

Said constraint device 20 can be provided with or without the blocking element 15, which, by stopping the rotation of the command lever, restricts the opening of the tap.

In the illustrated version, the constraint device 20 (see Figs 5-7) is ring-shaped and placed around the circular neck 14 that rotates with the command lever 12. It is fixed to the cock body 11 and fitted there by whatever method is appropriate, for example, a toothed coupling 21 which allows, furthermore, an angular positioning of the angular device of the means itself around the circular neck 14, as needed.

On one side of the constraint device 20, there is an elastic sector 22, loaded inwardly and with a lobe 23 for resting against the outer surface of the circular neck 14, in such a way as to stop the rotation of the command lever 12.

The surface of the circular neck 14 also has, at a suitable angle, a radial protuberance 24, which snags against the lobe 23 of the elastic sector 22 and obstructs the rotation of the neck and, thereby, of the command lever in at least one direction, while still permitting the lever to turn further if the obstacle is forcibly overcome.

Furthermore, the constraint device 20 has an internal hollow 25, on the opposite side from the elastic sector 22, which couples with the radial protuberance 24 when the constraint device is twisted the right way on the cock body (see Fig. 6). In this case, the neck and the lever are unable to rotate, thereby fixing a single mixing position which provides water only at a pre-arranged temperature.

## Claims

1. Economy device for single-lever tap for hot and cold water, having a tap unit consisting of ceramic nuts and a command lever (12) that can rotate around a horizontal axis on a rotating circular neck (14) for the opening and closing of the tap and around a vertical axis, together with said rotating neck (14), in order to vary the flow of hot and cold water to be mixed, characterised by a blocking element (15) applied to said command lever (12) and interacting with the top of said rotating neck (14), in order to constrain and temporarily stop the lever in the course of its rotation from the closed to the open position.

2. Device according to claim 1, in which said blocking element (15) has a vertical tab (16) which is fastened to one side of the command lever (12) and two horizontal and parallel elastic arms (17), which extend to either side of the lever and parallel to the rotation plane of the latter and which act against the upper surface of the rotating circular neck (14).

3. Device according to claim 1, in which said elastic arms (17) each terminate in a lobe rest (18), and in which the upper surface of the rotating circular neck (14) is furnished with inclined planes (19) that correspond to and interact with the rest lobes (18) of said elastic arms (17) in order to constrain and stop the rotation of the command lever.

4. Device according to claim 3, in which said lobe rests (18) of the elastic arms (17) can overcome said inclined planes (19) elastically, in order to allow the complete rotation of the lever and, consequently, the maximum opening of the tap.

5. Device according to the previous claims, characterised also by a constraint mechanism (20) for blocking the command lever (12) in the course of its rotation to mix the water, or for defining a single mixing position for the lever.

6. Device according to claim 5, in which said constraint mechanism (20) consists of a ring element, placed around the rotating circular neck (14), together with the command lever, and having an elastic sector (22) on one side, loaded inwardly, for resting against and constraining the outer surface of said circular neck (14).

7. Device according to claim 6, in which said constraint mechanism (20) is fixed to the body of the single-lever tap by use of a toothed coupling (21), and said elastic sector (22) has a lobe (23) for resting against and stopping the outer surface of the circular neck (14).

8. Device according to claims 6 and 7, in which said constraint mechanism (20) has an internal hollow (25) on the opposite side from the elastic sector (20), which is designed to accommodate a radial protuberance (24) on the circular neck (14) in order to define a single mixing position, preventing the lever from rotating further.

9. Economy device for single-lever taps for hot and cold water, having a tap unit formed by ceramic nuts and a command lever (12), which can rotate around a horizontal axis on a rotating circular neck (14) for the opening and closing of the tap, as well as rotating around a vertical axis, together with said rotating neck (14), in order to vary the flow of hot and cold water to be mixed, characterised by a blocking element (15) applied to said command lever (12) and interacting with the top of said rotating neck (14) so as to constrain and temporarily stop the lever in the course of its rotation from the closed to the open position, according to claims 2-4, and by a constraint mechanism (20) for blocking the command lever (12) in the course of its rotation to mix the water or to define a single mixing position for the lever, according to claims 6-8.

10. Economy device for single-lever taps for hot and cold water, having a tap unit formed by ceramic nuts and a command lever (12), which can rotate around a horizontal axis on a rotating circular neck (14) for the opening and closing of the tap, as well as rotating around a vertical axis, together with said rotating neck (14), in order to vary the flow of hot and cold water to be mixed, characterised by a constraint mechanism (20) for blocking the command lever (12) in the course of its rotation to mix the water or for defining a single mixing position of the lever, according to claims 6-8.
